(19) **Europäisches Patentamt**

**European Patent Office**

**Office européen des brevets**

(11) Veröffentlichungsnummer: **0 321 712 B1**

(12) **EUROPÄISCHE PATENTSCHRIFT**

(45) Veröffentlichungstag der Patentschrift: **15.04.92**

(51) Int. Cl.5: **B01D 37/04**, G01N 1/00

(21) Anmeldenummer: **88119447.6**

(22) Anmeldetag: **23.11.88**

(54) **Vorrichtung zum Filtrieren einer Reagenszugabe.**

(30) Priorität: **23.12.87 CH 5016/87**

(43) Veröffentlichungstag der Anmeldung:
**28.06.89 Patentblatt 89/26**

(45) Bekanntmachung des Hinweises auf die
Patenterteilung:
**15.04.92 Patentblatt 92/16**

(84) Benannte Vertragsstaaten:
**AT BE CH DE FR GB IT LI NL SE**

(56) Entgegenhaltungen:
**EP-A- 0 107 333**
**FR-A- 1 044 781**
**US-A- 3 143 393**

(73) Patentinhaber: **Oerlikon-Contraves AG**
**Schaffhauserstrasse 580**
**CH-8052 Zürich(CH)**

(72) Erfinder: **Lorenz, Adrian, Dr.**
**Attenhoferstrasse 36**
**CH-8032 Zürich(CH)**
Erfinder: **Scherrer, Heinz**
**Schönbodenstrasse 52**
**CH-8640 Rapperswil(CH)**

(74) Vertreter: **Hunziker, Kurt**
**c/o Oerlikon-Contraves AG Patentabteilung**
**Schaffhauserstrasse 580**
**CH-8052 Zürich(CH)**

EP 0 321 712 B1

Rank Xerox (UK) Business Services

## Beschreibung

Die Erfindung liegt auf dem Gebiet der automatisierten Laboranalyse und betrifft eine Vorrichtung zum Feinfiltern von Reagenszugaben in einen Analyseautomaten gemäss Oberbegriff des Patentanspruchs 1 und ein Verfahren zum Betrieb der Vorrichtung.

Im Gebiet der Partikelanalyse spielt es eine besonders grosse Rolle, ob die eingesetzten Reagentien ihrerseits partikelfrei oder zumindest partikelarm sind, da Fremdpartikel die Zählresultate verfälschen, ähnlich, wie dies bspw. bei farblichen Verunreinigungen von Lösungsmittel in der Kolorimetrie bekannt ist. Wenn nun, um beim Beispiel der kolorimetrischen Messung zu bleiben, die "Elimination" der farblichen Verunreinigung durch eine korrigierende Referenz- oder Kompensationsmessung noch ohne grossen Zusatzaufwand durchführbar ist, so liegt das Problem bei der Partikelanalyse auf einer anderen, wesentlich komplexeren Ebene. Die Partikelanalyse ist in der Regel ein echter Zählprozess, die Partikel werden einzeln erfasst, wohingegen aus einer optischen Messung (über das statistische Mittel) nur indirekt auf den Gehalt, die Menge eines Stoffes in der Lösung etc. geschlossen wird. Ferner wird bei der Partikelanalyse neben der Anzahl der Partikel im allgemeinen auch gleich deren Grösse ermittelt, sodass ein Messvorgang, der den Messinhalt Inhalt "en bloc" misst (bspw. Extinktion), nicht verwendet werden kann. Die Partikelanalyse ist von der Art nach eher der Spektroskopie und deren Problemen zuzuordnen, als den Messmethoden, bei denen das Resultat in einem, zeitlich gesehen, einzigen Messvorgang ermittelt wird. Demzufolge sind auch die Probleme von Störfaktoren, die Messung beeinflussen, komplexer und damit viel schwieriger auszuschalten. Die direkte Kompensation mit Hilfe der bekannten Methoden (Referenzmessung) konnte sich deshalb auch nicht durchsetzen.

So ist man nach wie vor gezwungen, reinste Lösungs- und/oder Verdünnungsmittel einzusetzen, um in der Partikelanalyse tolerierbare "Leerzählungen" zu erhalten; dies ist der Begriff, mit welchem die Anzahl und die Verteilung einer Restmenge nicht eliminierbarer Fremdpartikel genannt wird.

Hier tun sich jedoch andere Probleme auf, die nicht direkt mit dem Messvorgang, als mit dessen vorbereitenden Handlungen zu tun haben. Das Herstellen von nahezu bis ganz partikelfreien Lösungs- und oder Verdünnungsmitteln ist an und für sich kein Problem und es ist nicht daran zu zweifeln, dass derart hergestellte Produkte in ihren Gebinden tatsächlich den Anforderungen der modernen und vor allen Dingen der automatisierten Partikelmesstechnik genügen. Dies ändert sich jedoch dann grundlegend, wenn mit diesen Lösungsmitteln in einem grösseren Volumenumfang umgegangen werden muss, wie dies bei Automaten mit ihren ausreichend grossen Reservoirs der Fall ist. Ein weiterer entscheidender Aspekt ist der folgende: die verwendeten Lösungen bestehen nahezu nur aus Lösungsmittel, bspw. Wasser, welches in der Regel weit über 90% des Gesamtvolumens ausmacht. So läge es wohl jedem Hersteller nahe, vehikelfreie Premixe, das heisst, lösungsmittelarme Konzentrate anzubieten, zu verschicken usw., wenn das Problem der sachgemässen und nicht zuletzt doch recht aufwendigen Aufbereitung des Konzentrats zur einsatzfähigen Lösung nicht wäre. Hier liegen echte Grenzen, die gebotene Möglichkeiten einschränken.

Um eine flüssige Phase von innewohnenden Feststoffen (Partikeln) zu befreien, wird in der Regel filtriert. Das Filtrieren ist vom Ablauf her eher ein langsamer Prozess, welcher sich für einen Batch-Betrieb besser eignet, als für einen kontinuierlichen Betrieb. Sobald jedoch ein Filtrationsvorgang in einem kontinuierlichen Vorgang vorgesehen wird, müssen eine ganze Reihe von Kompromissen eingegangen werden, wobei einer der Hauptkompromisse die markante Ueberdimensionierung der Filtervorrichtung samt der zur Filtrierung verwendeten Pumpe ist. Dies deswegen, weil eine Filterstelle in einem kontinuierlichen Prozess einen Engpass darstellt. Dies gilt auch noch, wenn ein quasi-kontinuierlicher Betrieb mit einer hohen Wiederholungsfrequenz vorliegt.

In speziellen Gebieten der Partikelanalyse, bspw. in der Hämatologie, wird die Fähigkeit, immer kleinere Partikel in der Analyse erfassen zu können, ständig wichtiger. In der Krebstherapie bspw. zur Verlaufskontrolle krankhafter Zellstörungen, würde die spezi fische Partikelanalysefähigkeit im Kleinstteilebereich zu einer markanten Ausweitung der Möglichkeiten führen. Dies stellt natürlich auch entsprechend erhöhte Anforderungen an die eingesetzten Flüssigmedien, die nun von in früheren Zeiten unmessbar kleinen Partikeln befreit werden müssen, da solche die Partikelmessung in diesem Bereich nun empfindlich stören würden. Dies könnte soweit kommen, dass fertige Verdünnungsmedien (bspw. in Cubitainern), wie sie heute üblich sind, in der geforderten Qualität gar nicht mehr zur Verfügung gestellt werden können. Solche als "fertig" angebotenen Flüssigmedien hätten lediglich noch eine Vorstufe der geforderten Reinheit aufzuweisen und wären tel quel nicht mehr einsetzbar.

Möchte man nun die Filtrierung von Flüssigmedien mit Partikeln in Submikrongrösse bei der Partikelanalyse einführen, so müsste erstens eine Filtervorrichtung im Zusammenhang mit dem Partikelanalysegerät vorgesehen werden und zweitens müsste dies ausserdem eine besondere Filtervorrichtung sein, welche speziell für diesen Zweck geschaffen werden müsste, und die folgenden Kriterien erfüllen müsste:

a. Es muss beim Lösungs- oder Verdünnungsmittelzugriff immer die ausreichende Menge an flüssigem Mittel vorhanden sein,

b. Dieses Volumen soll stets frisch filtriert sein, damit eine zwischenzeitliche Kontamination so gut als möglich eliminiert bzw. minimiert ist (extrem kurze Standzeiten).

c. Die Grenz-Kadenz, damit ist die grösstmögliche Filtrierate der Filtervorrichtung gemeint, soll oberhalb der Grenz-Kadenz des Automaten liegen (damit ist der grösstmögliche Durchsatz eines oder mehrerer Automaten gemeint). Dies entspricht einer Anbiete-Leistung.

Man sieht unmittelbar ein, dass sich die einzelnen Forderungen zum Teil diametral entgegenstehen.

Es ist daher Aufgabe der Erfindung, einerseits eine Filtervorrichtung an einem Partikelanalysegerät für die zur Analyse in-line eingesetzten Flüssigmedien zu schaffen und andererseits ein zum Betrieb der Einrichtung geeignetes Verfahren anzugeben.

Diese Aufgabe wird durch die in den unabhängigen Patentansprüchen definierte Erfindung gelöst, von der die grundlegenden Merkmale in den kennzeichnenden Teilen angegeben sind.

Anhand der nachfolgend aufgeführten Figuren werden zwei Ausführungsbeispiele der Erfindung eingehend diskutiert.

Fig.1 zeigt in schematischer Darstellungsweise eine erste Ausführungsform einer Filtervorrichtung mit einem Kurzzeitreservoir mit einstellbar kurzen Flüssigmedium-Standzeiten.

Fig.2 zeigt in schematischer Darstellungsweise eine zweite Ausführungsform der Filtervorrichtung, bei der zwei Filter in bestimmter Weise parallel geschaltet sind.

Fig.3 zeigt eine dritte Ausführungsform, die ähnlich wie die Ausführungsform gemäss Figur 2 aufgebaut ist, jedoch mit einer anderen Art von Filterpumpe und Flüssigkeitssteuerung ausgerüstet.

Fig.4 zeigt eine vierte Ausführungsform, bei der das verwendete Verfahren durch eine digitale Steuerung im Analysegerät gesteuert wird und in der auch die Sensoren, Steuerelemente und Filterpumpe über ein digitales Regime gesteuert werden.

Fig.5 zeigt ein allgemeines Diagramm einer Partikelanalyse zur Definition eines sogenannten Kleinstteilchenbereiches.

Fig.6 zeigt das Diagramm einer nicht akzeptablen Leerzählung in einer Partikelanalyse, bei Verwendung von fremdpartikelbelasteten Flüssigmedien.

Ferner zeigen zwei Tabellen I und II, welche Protokollausdrucke eines Hämatologiegerätes sind, je eine gemessene und quantifizierte Leerzählung mit und ohne Filtervorrichtung. Dazu ist zu sagen, dass je nach Verwendung von Filtereinsätzen gute bis beste Resultate erreichbar sind.

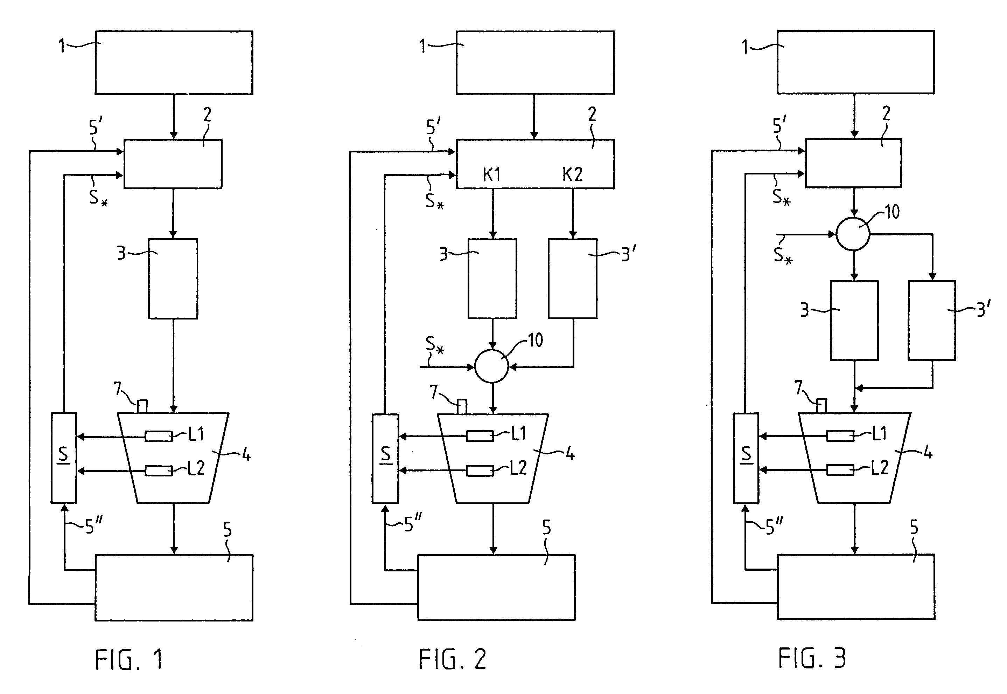

In der Darstellung nach Figur 1 erkennt man eine Partikelanalyseanlage 5 mit hervorgehoben gezeichneter Partikelfiltereinrichtung, wie sie gemäss Erfindung vorgeschlagen wird. Ein Standreservoir 1 enthält ungefilterte oder vorgefilterte Lösung oder Lösungsmittel in ausreichender Menge, bspw. für einen Tag Dauerbetrieb. Es wird angenommen, dass dieses Medium den Reinheitsanforderungen bezüglich Partikel nicht genügt und zur Analyse die eingesetzte Flüssigkeit noch aufbereitet werden muss. Dies geschieht "on-line" in der nachfolgenden Filtervorrichtung, bestehend aus den Hauptbauelementen 2 (Filterpumpe), 3 (Filter) und 4 (Kurzzeitreservoir), welche in einen Steuerkreis über eine Steuerung S eingebunden sind. Die steuer- bzw. regelbare Pumpeneinheit 2 entnimmt dem Standreservoir 1 Flüssigmedium und pumpt es unter adäquatem Druck in eine Filtereinheit 3, die einen Filtereinsatz mit bspw. Submikrometerporen beinhaltet. In der Regel wird beim Filtrieren die auf den Filter aufgebrachte Flüssigkeit abgesaugt, das heisst, die Pumpe drückt nicht auf den Filter, sondern zieht, durch Bildung einer Druckdifferenz unterhalb des Filters, die Flüssigkeit ab. Dies hat Vorteile dahingehend, dass die Betriebsdruckbegrenzung am Filter bei ungefähr 1 bar von selbst gegeben ist und Schäden durch Ueberdruck ausgeschlossen werden. In der vorgeschlagenen Lösung wird jedoch auf diesen Vorteil verzichtet und die Pumpenleistung beaufschlagt in Fliessrichtung direkt die Filterfläche. Mit dieser Massnahme kann verhindert werden, dass sich Kleinstpartikel, die in der Pumpe, bspw. durch Abrieb entstehen, direkt in den Analysator gespült werden. Ferner wird unter anderem Schaumbildung und Hohlsog im Flüssigmedium vermieden, welche im nachgeschalteten Kurzzeitreservoir zu Aliquotierproblemen führen könnten. Ueber den betrieblichen Zusammenhang zwischen Pumpe, deren Leistung und Filterart, Filterfläche und deren Widerstand, sowie der einzustellenden Schluckcharakterisitk zum Kurzzeitreservoir etc., wird weiter unten noch eingegangen.

Das Kurzzeitreservoir 4 ist kleinvolumig und volumengeregelt. Es ist entlüftbar, jedoch gegen Kontamination geschützt (geschlossen) und weist eine Pegeldetektiervorrichtung S mit zwei Sensoren L1 für einen oberen und L2 für einen unteren Pegel auf. Das Kurzzeitreservoir ist ausserdem wartungsleicht gestaltet; es soll rasch auswaschbar, gegebenenfalls austauschbar sein und keine Kontaminationsstellen (Ecken und Ritzen) aufweisen. Aus diesem Kurzzeitreservoir wird das Analysegerät 5 mit Lösungsmedien versorgt.

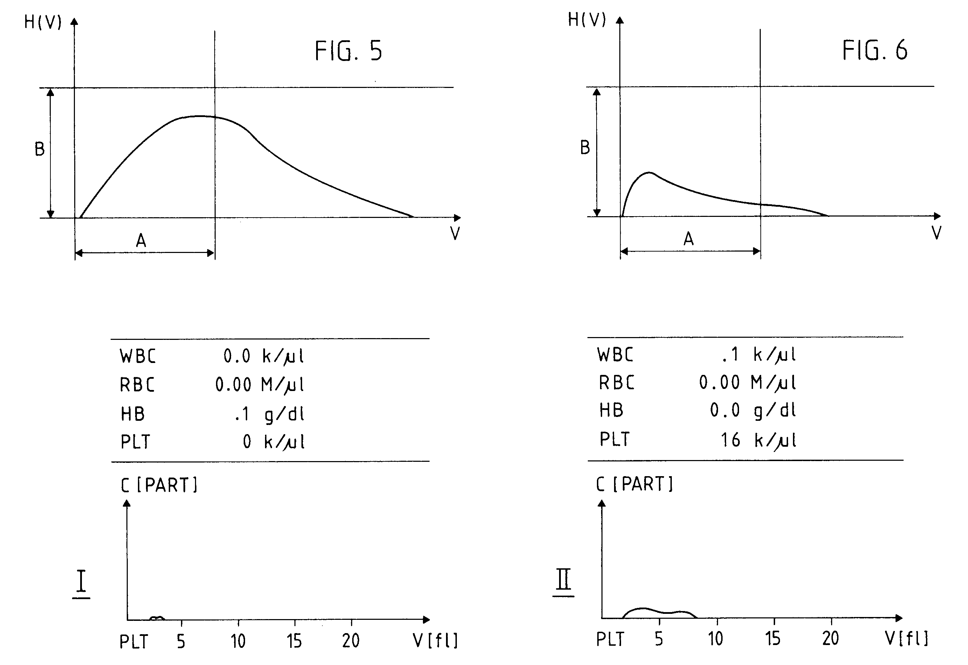

Soviel zum Prinzip der Einrichtung und zum apparativ geregelten Lauf der zur Analyse verwendenten Flüssigkeiten. Bevor auf die weiteren Ausführungsformen gemäss den Figuren 2, 3 und 4 eingegangen wird, sollen nachfolgend einige vielgebrauchte Begriffe im Gebiet der Partikelanalyse anhand der Figuren 5 und 6 vorweg noch diskutiert werden.

Figur 5 zeigt ein allgemeines Diagramm einer Partikelanalyse, in welchem die Häufigkeit H(V) gegen das Partikelvolumen V aufgetragen ist. Der Bereich A ist ein Kleinstteilchenbereich, in welchem heute bspw. Thrombozyten von besonderem Interesse sind, in welchem Bereich sich aber auch Störpartikel, wie oben diskutiert, besonders störend bemerkbar machen und die Eindeutigkeit der Messung in Frage stellen. Der Bereich B ist ein Häufigkeitsbereich, in welchem, auf das gleiche Beispiel bezogen, heute noch kleinste Thrombozytenmengen, welche z.B. in der Krebstherapie von Bedeutung sind, in ihrer Verteilung quantitativ erfasst werden sollen, in welchem Bereich sich aber auch (numerisch, also auf die Zählung bezogen) entsprechend kleine Mengen von Störpartikeln bemerkbar machen. Dies rührt daher, dass ein durch eine Krebstherapie ausgelöster Zellschwund (Thrombozytenschwund) erkannt werden muss, wenn man rechtzeitig die nötigen Massnahmen einleiten will (bspw. Transfusionen) oder wenn man während einer Chemotherapie, mit all den bekannten Nebenwirkungen, die Dosierung der Medikamente optimal steuern will. Wenn die Kriterien dazu durch Messungen sicher festgestellt werden können, hat man in der Diagnose wie auch in der Therapie ein Mittel in der Hand, die lebensrettenden oder zumindest -verlängernden Massnahmen auszuwählen und gezielt anzuwenden.

Figur 6 zeigt nun, zusammen mit den beiden Tabellen I und II, das Beispiel einer schlechten Leerzählung (Tabelle II), bzw. einer guten Leerzählung (Tabelle I), wie sie bei Verwendung der erfindungsgemässen Filtervorrichtung die Regel ist. Die Zahlen in den Tabellen geben die Menge pro Volumeneinheit an, in Tausend Teilchen pro Mikroliter für die weissen Blutkörperchen (WBC) und für die Thrombozyten oder Blutplättchen (PLT), in Millionen Teilchen pro Mikroliter für die roten Blutkörperchen (RBC) bzw. in Gremm pro Deziliter für das Hämoglobin (HB). Die schlechte Leerzählung zeigt im Kleinstteilchenbereich bereits einen hohen Beitrag an Partikeln, sodass die Empfindlichkeitsschwelle für die Messung von Thrombozyten wegen dieses störenden Untergrundes unerwünschterweise nach oben verschoben wird. Betrachtet man die beiden Tabellen I und II, so sieht man an der "guten" Leerzählung (Tabelle I), dass hier eine nahezu kleinstpartikelfreie Lösung zum Einsatz kommt, und das Histogramm der nachfolgenden Messung nur Partikel anzeigt, die analytisch relevant sind und eine gute Interpretation zulassen. Bei der "schlechten" Leerzählung (Tabelle II) ist man nie sicher, ob eine relevante Information gerade im Anzeigebereich der Fremdpartikel untergegangen ist. Spätestens hier wird einem die Bedeutung des Einsatzes von fremdpartikelfreien Lösungsmedien klar, doch sieht man auch die Probleme, die der Verwirklichung eines solch hohen Standards entgegenstehen.

Im funktionalen Ablauf der Gesamtanlage, wird davon ausgegangen, dass am Ausgang des Kurzzeitreservoirs 4 jederzeit ein genügend grosses Volumen von Flüssigkeit mit möglichst kurzer Standzeit entnommen werden kann. Dies geschieht portionenweise in einem übergeordneten Arbeitstakt. Davon ausgehend, sollte nach einer Flüssigkeitsentnahme das Kurzzeitreservoir idealerweise leer sein, jedoch, auch im Falle einer Arbeitstaktarrythmie, gleich wieder genügend voll sein, um diesen Sonderbedarf decken zu können. Dem steht jedoch das Verhalten der Filtereinheit entgegen, die einen Fliessengpass darstellt und auch Totzeiten aufweist. Somit wird das Kurzzeit-Reservoir um einen Faktor grösser als 1,0*Abzugsvolumen ausgestaltet und ein Volumendifferenzbetrieb etabliert, der folgendermassen funktioniert.

Bei einem Pegel L1 sind bspw. 1,5*Schluckvolumen des Analysegerätes Flüssigkeit beinhaltet und die Pumpe ausser Betrieb. Unterhalb des Pegels L1 wird die Pumpe eingeschaltet und es fliesst während der Flüssigkeitsentnahme frisch filtrierte Flüssigkeit nach. Dies gilt für alle Ausführungsformen, die in den Figuren 1 bis 4 dargestellt sind.Die Entnahmegeschwindigkeit wird in der Regel höher sein, als die Nachlaufgeschwindigkeit, sodass sich der Flüssigkeitsspiegel sukzessive dem Pegel L2 nähert. Erreicht er diesen, so wird bei den Ausführungsformen nach den Figuren 2 bis 4 automatisch ein Bypassfilter (oder mehrere) eingeschaltet und die Filterleistung kurzzeitig verdoppelt (vermehrfacht). Auf diese Weise wird durch ein flexibles Angebot bei der Bedingung Kurzzeitreservoirvolumen nahezu gleich Schluckvolumen eine hohe Betriebssicherheit gegenüber Taktarrythmien oder leichten Taktabweichungen er zielt und zugleich minimalste Standzeiten (nur ein Arbeitstakt lang) erreicht. Der Bypass schaltet sich natürlich auch bei abnehmender Filterleistung (Filterverschmutzung) ein, sodass ein sukzessives Verstopfen des Filters nicht nur früh genug detektiert, sondern auch optisch und/oder akustisch angezeigt werden kann. Die Steuersignale dazu erhält man durch den gemessenen Vergleich der Einsatzzeiten von Master (Hauptfilter) und Slave (Nebenfilter). Sobald der Slave übermässig oft zum Einsatz kommt, muss der Master ausgetauscht werden.

Nach der Flüssigkeitsentnahme durch das Analysegerät, füllt die Pumpe das Kurzzeitreservoir weiterarbeitend auf, bis der Flüssigkeitsspiegel den Pegel L2 von unten her erreicht, worauf die Bypass-Filtereinheit weggeschaltet wird und bei Erreichen des Pegels L1 auch die Pumpentätigkeit solange unterbrochen wird, bis der Flüssigkeitsspiegel, durch die neuerliche Entnahme wieder unterhalb dem Pegel L1 zu liegen kommt. Ueberflüssig zu erwähnen ist wohl, dass bei allen diesen Vorgängen der Kurzzeitreservoirraum be- und entlüftet werden muss, was durch ein Entlüftungsfilter 7 dargestellt ist. Durch den Druck- statt Saugbetrieb wird die Blasenbildung im Abfluss des Reservoirs verhütet und der Filterdurchsatz wird regulierbar durch entsprechende Steuerung des Pumpendruckes. Auf diese Weise kann das Voluminagleichgewicht zwischen Entnahme und Zuführung eingestellt werden. Durch "Verschieben" dieses eingestellten Gleichgewichts bezüglich Volumdurchsatz, kann die Filtervorrichtung auch auf die Kadenz des Analysegerätes eingestellt werden. Dies ist wichtig, da die vorgeschlagene Filtervorrichtung sich für eine Mehrzahl von Apparatetypen im Gebiet der Partikelanalyse, aber auch für andere Applikationen, wo es auf eine Inline-Filterung ankommt, eignet. Diese breite Tauglichkeit erhält die Einrichtung insbesondere durch die eben diskutierten Ausführungsformen.

In der ersten Ausführungsform gemäss Figur 1, das ist die einfachste von allen, verzichtet man auf einen Bypass-Filter und der Sensor für den Pegel L2 wird nicht gebraucht. In einer Ausführungsvariante jedoch benützt man den Sensor für den Pegel L2 zum Einschalten der Pumpe, welche dann nicht arbeitet, wenn der Flüssigkeitsspiegel von oben her kommend zwischen den beiden Pegeln liegt, bzw. die Pumpe schaltet, nachdem der Flüssigkeitsspiegel den Pegel L1 von unten erreicht und das Reservoir wieder voll ist, wieder ab. Dieser Betrieb kann durch Einsatz der oben beschriebenen Zusatzfiltereinheit und der entsprechend erweiterten Steuerschaltung S leicht auf den intelligenteren Betrieb der ersten Ausführungsform umgestellt werden.

Als Pumpeneinheit 2 kann eine Kolbenpumpe K1/K2 mit einem Schöpfvolumen, das ein Mehrfaches des Kurzzeitreservoirvolumens beträgt, verwendet werden (Fig.2). Im Grunde genommen eignen sich auch Kreiselpumpen, Flügelpumpen, Zahnradpumpen und dergleichen, kurz Rotationspumpen, wie dies die Ausführungsform nach Figur 3 zeigt. Eine Kolbenpumpe jedoch hat den Vorteil der einfachen Pumpendrucksteuerung einerseits und einen minimalen Eigenabrieb andererseits. Letzteres ist natürlich bei der angestrebten Kleinstpartikelanalyse wesentlich und nicht zuletzt würde ein ständiger Abrieb aus der Pumpeneinheit die Filtereinheit/en zusätzlich belasten. Zudem ist die Kolbenpumpe für einen intermittierenden Betrieb besser geeignet, als Pumpen, die zur Erreichung der Pumpwirkung erst wieder die geeignete Strömung aufbauen müssen (Pumpen für Dauerbetrieb). Vorteilhaft sind Kolbenpumpen aus Glas, welches Material in der Regel als korrosionsfest gelten dürfte. Die Umsteuerung der Kolbenpumpe geschieht gemäss bekanntem Vorgehen. Sollte bei sehr hoher Kadenz auch die Umsteuer- und nachfolgende Füllzeit des Kolbens überbrückt werden müssen, so empfiehlt sich der Einsatz eines zweiten, reziprok arbeitenden Kolbens (oder Pumpe). Will man eine solche Lösung jedoch nicht, so greift man zu einer kontinuierlichen Pumpe der oben genannten Typen, indem man sie statt auszuschalten, gegen ein geschlossenes Ventil pumpen lässt.

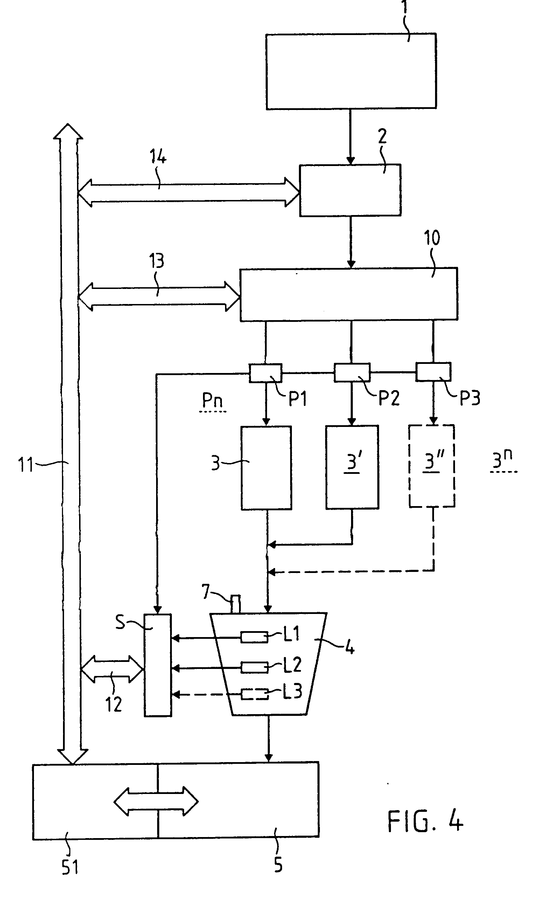

Eine Umsteuereinheit 10, bspw. ein Mehrweghahn, ist entweder den Filtern nachgeschaltet, wie im Beispiel mit den Kolbenpumpen K1/K2 (Fig.2) oder den Filtern vorgeschaltet, wie im Beispiel mit der Rotationspumpe (Fig.3). Die Umsteuerung geschieht mittels dem Signal S* aus der Steuereinheit S, welcher auch die Pumpensteuerung obliegt. Das Signal S* ist als allgemeines, bspw. zusammengesetztes Signal aufzufassen. Der Vektorcharakter dieses Signals ist mit dem Index * = stern angedeutet. Näheres darüber wird noch im Zusammenhang mit dem Verfahren (gemäss Fig.4) diskutiert werden. Bei der Verwendung einer Rotationspumpe, kann der kontinuierliche Betrieb in zwei oder mehr Stufen der Rotationsgeschwindigkeit ablaufen. Bspw. ist die Rotationsgeschwindigkeit beim Beschicken lediglich eines Filters 3 oder 3' (wenn bspw. 3 verstopft ist) nur die Hälfte derjenigen, bei der beide Filter 3 und 3' simultan beschickt werden müssen. Je nachdem ist es dann sinnvoll, ein weiteres Umsteuerelement 10 auch den Filtern nachgeschaltet zu verwenden, welches ebenfalls von der Steuereinheit S angesteuert wird.

Die Filtereinheit ist vorzugsweise eher kleinvolumig und die Filterfläche lediglich so gross gewählt, dass die Filtereinheit unabhängig von einer Schwerkraftwirkung eingesetzt werden kann. Dies kann dann wichtig sein, wenn durch einen nachträglichen Einbau, der bei alten Geräten immer zu empfehlen ist, räumliche Sachzwänge einen flexiblen Einbau erfordern. Als Filtermaterial sind bekannte Filter verwendbar. In der Regel dürften käufliche verwendbare Filterpatronen beinahe unverändert brauchbar sein, sodass davon abgesehen wird, diese Filtereinheiten näher zu beschrieben.

Die Steuereinheit S hat die Aufgabe, aus den Pegelüberwachungswerten die richtigen Tätigkeiten der Pumpe zu veranlassen. Das wäre im einfachsten Fall das Aus- und Einschalten (Fig.1), sowie bei den beiden Ausführungsformen nach den Figuren 2 und 3 das Zu- und Wegschalten des Bypass-Filters. Ebenfalls gehört dazu die allfällige Umsteuerung bei der Verwendung einer Kolbenpumpe, sowie die Steuerung der Umsteuerelemente 10, mit welchen der Materialweg bestimmt wird. Die Steuereinheit erhält nebst den Signalen der Pegelsensoren L1,L2 auch die Taktinformation 5″ aus dem Analysegerät 5, mit welcher Pumpendruck und/oder die Kadenz (Durchsatz) gesteuert werden. Ein weiterer Signalweg 5′ führt von der Analyseneinheit 5 zur Pumpeneinheit 2, auf welchem auch weitere Bedingungen in Form von Signalparametern übermittelt werden können. In der Ausführungsform nach Figur 4 sind vor den Filtereinheiten Drucksensoren vorgesehen, sodass ausser den Pegelsignalen auch Drucksignale zur Steuerung oder Regelung des Angebotes an filtriertem Medium herangezogen werden können. Die Leistungsfähigkeit der Filtervorrichtung nach Erfindung kann sich flexibel nach der Schluckfähigkeit des Abnehmergeräts richten, diese Schluckfähigkeit muss jedoch dem Steuergerät in rechter Art und Weise mitgeteilt werden. Weiter beherbergt das Steuergerät S für die erste Ausführungsform eine Anzeige- sowie Vergleichsvorrichtung zum Anzeigen der Tätigkeit und des Vergleichsresultats der Betriebstätigkeit der beiden Filtereinheiten Master und Slave. Daraus wird dann, wie schon gesagt, auf den Zustand des oder der Filter in den Filtereinheiten geschlossen.

Figur 4 zeigt nun eine Filtervorrichtung, die vollends über digitale Mittel bewirtschaftet wird. Sie zeigt auch, besser als die anderen drei Figuren, den Verfahrensablauf in seiner übergeordneten Gesamtheit. Zur verständlichen Darstellung sind die gleichen Referenzzahlen, so gut es überhaupt geht, beibehalten und nur die wesentlichen Elemente aufgezeigt. Diese sind, von oben nach unten aufgezählt, ein Standreservoir 1 mit dem zu filtrierenden Medium, eine steuer- oder regelbare Pumpeneinheit 2, eine Umsteuereinheit 10, welche hier im Sinne eines Multiplexers aufgebaut ist, sobald mehr als zwei Filterwege realisiert werden sollen. Darauf folgen, immer dem Materialweg entlang, wahlweise Drucksensoren P1, P2, P3 bis Pn, mit denen der Gegendruck der nachgeschalteten Filter 3 bis $3^n$ gemessen werden kann. Die parallel geschalteten Filter 3 bis $3^n$ münden schliesslich in einen gemeinsamen Einlauf, der seinerseits in die Zwischenspeichereinheit 4 mit den Pegelsensoren L1, L2 und evtl. L3 mündet. Die Zwischenspeichereinheit ist materialmässig mit dem Partikelanalysegerät 5 verbunden, das mit einem digitalen Steuerungsprozessor 51 über einen, hier symbolisch dargestellten Bus signalmässig in Verbindung steht. In der Regel ist der Prozessor 51 ein Computer auf der Stufe eines PC; aber auch speziell auf diese Applikation zugeschnittene Einplatinenprozessoren sind ebenso tauglich.

Vom Prozessor 51 führt ein zentraler Datenbus 11 zu allen steuerbaren Geräteteilen, die allesamt natürlich entsprechend addressierbar sein müssen. Die hier gezeigte Konfiguration ist nicht die einzig mögliche, jedoch in der angestrebten Verfahrenskomplexität die einfachste. Die Steuereinheit S empfängt alle Sensorsignale. Hier sind es die Pegel- und Druckzustandssignale. Die empfangenen Signale werden über den Bus 12 zum Rechner 51 gebracht und dort zusammen mit Signalen aus dem Analysator 5 zu Regelparametern und Adressen, an welche die spezifische Wirkung abgegeben werden soll, aufgearbeitet, welche dann über den Systembus 11 zu Stellglied/Pumpe 2 (Bus 14) und Verteiler 10 (Bus 13) geführt werden. Der als Multiplexer arbeitende Verteiler 10, kann mit einem eigenen Ünterprogramm in die gewünschte Art der Betätigung gebracht werden.

Angenommen, die Pumpeneinheit 2 bestehe aus einer drehzahlgesteuerten Rotationspumpe (es kann auch eine Mehrstufenpumpe sein), die dem Multiplexer/Verteiler 10 jeweils so ziemlich unverzüglich den gewünschten Pumpendruck zum Durchschalten auf einen oder zwei oder mehrere Filter anbietet, so sind u.a. folgende Betriebsvarianten möglich:

- Es werden alle Filter miteinander beaufschlagt, die Zwischenspeichereinheit 4 wird sich rasch füllen. In dieser kurzen Zeit jedoch bauen sich die Drucke über den Filtern je nach ihrem Zustand verschieden schnell auf, was von den Drucksensoren registriert wird. Für den nachfolgenden Betrieb wird ein Filterweg mit mittlerem Druckanstiegsverhalten ausgewählt. Kriterium dazu, Filter mit raschem Druckaufbau können verstopft sein (nur noch kurze Betriebsdauer möglich), Filter mit langsamem Druckaufbau sind noch frisch (lange Betriebsdauer möglich).

- Im nachfolgenden Betrieb wird zum Filter mit mittlerem Druckanstiegsverhalten derjenige Filter mit dem schnellsten Druckanstiegsverhalten dazugeschaltet. Steigt das Medienangebot über das geforderte Schluckvermögen des Analysators über einen vorgegebenen Grenzwert, so wird dieser Filter solange zusätzlich betrieben, bis dieser Grenzwert unterschritten ist und dann vom Rechner (als verstopft) zum Auswechseln gemeldet. Auf diese Weise können insbesondere teuere Filtereinheiten optimal ausgenützt werden.

- Während dem "Zweifilterbetrieb" werden die übrigen Filter in einer Art Testläufen in vorbestimmten Zeitabständen eingesetzt, um deren Funktionsfähigkeit immer wieder neu zu überprüfen. Aus dem früheren Druckanstiegsverhalten, das vorteilhafterweise gespeichert bleibt, lässt sich eine mögliche Verschlechterung des Standverhaltens ableiten und der betroffene Filter wird dann früher eingesetzt als ein Filter mit besserem Standverhalten. Selbstverständlich ist der Rechner auch in der Lage, diese festgestellten Verhalten in individuellen Filterprotokollen auszugeben. Man denke hier an Filtervorrichtungen gemäss Erfindung, die eine Mehrzahl von Analysatoren von möglicherweise verschiedenen Kapazitäten und beliebigen Einsatzzeiten zentral versorgen.

- Das Auswechseln eines oder mehrerer Filter wird dem Rechner mitgeteilt, damit er über den Multiplexer die Bewirtschaftung von im Filteraustausch stehenden Materialpfaden unterbindet. Während dieser Zeit sind in ebenso optimaler Weise, wie bisher, die anderen Filter damit beschäftigt, den Betrieb aufrecht zu erhalten.

Die Erkennungsparameter für einen Filter, leiten sich u.a. aus dem Druckanstiegsverhalten ab. Die Datensätze zu einem Filter können aus einer im Automaten gespeicherten "Bibliothek" über ein Menu auf dem Bildschirm angeboten und von dort ausgewählt werden. Die Zuordnung von Daten zu einem verwendeten Filter vereinfacht die Ueberwachung dahingehend, ob der richtige Filter eingesetzt ist oder nicht.

Es ist unmittelbar einzusehen, dass die Betriebssicherheit auf diese Weise überproportional zunimmt. Die hier diskutierten Verfahren und Vorrichtungen erlauben ein Erkennen von erschöpften Filtern, von neuen Filtern, von angebrauchten und bald fertig gebrauchten Filtern, aber auch das Standzeitverhalten kann ermittelt werden. Ferner kann die Parallelität, die Information und Sicherheit (Redundanz) erbringt, jederzeit herangezogen werden, um jedem vorhandenen Schluckvermögen eines oder mehrerer Apparate unmittelbar zu dienen. Die Informationen können zur Gesamtbewirtschaftung der Filteranlage verwendet werden, in dem angezeigt wird, welche Filter auszutauschen sind, welche Filter früher als andere in Betrieb genommen werden sollen und nicht zuletzt, welcher Filter innerhalb seiner Standzeit frühzeitig betriebsunfähig wurde und trotz geringer Benützung ausgetauscht werden muss. Es ist klar, dass damit auch die Disposition für mehrere Anlagen erleichtert wird. Auch das Einsetzen eines falschen Filtertyps kann ermittelt werden, was die Sicherheit nochmals erhöht.

Mit der Filtervorrichtung, wie sie hier vorgeschlagen wird, ist ein zuverlässiger Betrieb unter hoher Belastung möglich. Auch die Betriebssicherheit bei Abweichungen vom mittleren geforderten Betriebszustand ist gegeben. Diese Abweichungen können im Extremfall ein Art Extrasystole bedeuten, das heisst, eine ausserterminliche Zusatzentnahme in der Grössenordnung eines vollen Abgabevolumens, welche Entnahme von der Filtereinheit in Hinsicht auf einen automatischen Betrieb ebenfalls verkraftet werden muss. Wenn auch die Wahrscheinlichkeit so eines extremen Vorfalls verhältnismässig gering sein dürfte, könnte ein automatischer Betrieb bei hoher Verarbeitungsgeschwindigkeit bei Eintreten solch eines Ereignisses doch empfindlich gestört, ggf. sogar der Betrieb ausser Funktion gesetzt oder in einen fehlerhaften Ablauf gebracht werden.

Das angegebene Verfahren eignet sich zum Beschicken eines oder mehrerer Analyseautomaten mit filtrierten Medien. Im wesentlichen wird durch die Steuerung einer Zuführpumpe mit Parametern des gemessenen Pegelverhaltens in einem Abgabebehälter und durch Parameter des gemessenen Druckänderungsverhaltens über den zwischen Abgabebehälter und Zuführpumpe angeordneten Filtereinheiten der Filterzustand erfasst und die Filter entsprechend ihrer Betriebseignung betrieben.

So werden bspw. zwei Filter zum Betrieb verwendet, während die restlichen Filter in Bereitschaft stehen und während der Bereitschaftszeit diese Filter in bestimmten Zeitabständen zu Kontrollzwecken kurzzeitig in den Haupt-Betrieb aufgenommen werden. Ferner kann für den Betrieb ein Filter aus dem gesamten Filtersatz mit einem mittleren Druckanstiegsverhalten gegen den Pumpendruck und das Filter mit dem schnellsten Druckanstiegsverhalten gegen den Pumpendruck für den Betrieb ausgewählt werden. Das Filter mit dem schnellsten Druckanstiegsverhalten ist das "erschöpfteste oder verstopfteste" der ganzen Batterie, es kann auf diese Weise optimal oder sogar maximal ausgenützt werden.

Ein Filter mit einem Druckanstiegsvehalten, das höher liegt, als ein bestimmter Schwellwert, kann vom (Haupt-) Betrieb ausgeschieden und ein anderes Filter mit geringerem Druckanstiegsvehalten in Betrieb genommen werden. Filter mit einem gemessen am spezifischen Druckanstiegsverhalten des eingesetzten Filtertyps unspezifischen Verhalten können vom Betrieb ausgeschieden und/oder angezeigt und/oder protokolliert werden. Verfahrensmässig bietet sich hier ein überaus grosser Spielraum, der durch die nötigen Massnahmen genützt werden kann.

**Patentansprüche**

1. Filtervorrichtung für Reagenzien zur Beschickung von Partikelanalysegeräten, gekennzeichnet durch eine steuerbare Pumpeneinheit (2), die eingangsseitig mit einem Behälter für ein zu filtrierendes Flüssigmedium verbindbar ist und ausgangsseitig mit einer Filtereinheit (3) verbunden ist und diese Filtereinheit mit einer Zwischenspeichereinheit (4) für das Flüssigmedium verbunden ist, aus welchem die Flüssigkeitsabgabe an den Partikelanalysator erfolgt, wobei die Zwischenspeichereinheit (4) Mittel (L1,L2) zum Detektieren des Flüssigkeitsspiegels aufweist und das Detektiermittel mit einer Steuereinheit (S) zur Steuerung der Pumpeneinheit verbunden ist.

2. Filtervorrichtung nach Anspruch 1, dadurch gekennzeichnet, dass die Filtereinheit (3) zwei parallel betreibbare Filter aufweist, die mit einer Umsteuereinheit (10) zum Zuschalten des Flüssigkeitsstroms durch den Filter verbunden sind.

3. Filtervorrichtung nach Anspruch 2, dadurch gekennzeichnet, dass einer der beiden Filter durch das Detektiermittel (L2) für den volumenmässig tieferen Flüssigkeitspegel zuschaltbar ist.

4. Filtervorrichtung nach Anspruch 1, dadurch gekennzeichnet, dass die Pumpeneinheit (2) eine Kolbenpumpe aufweist, deren Pumpgeschwindigkeit und Pumpendruck durch die Steuereinheit (S) gesteuert wird, wobei die Steuereinheit (S) einen Eingang für eine Arbeitstakt-Signalfolge aus dem Partikelanalysegerät (5) für die Pumpenkadenz aufweist.

5. Filtervorrichtung nach Anspruch 4, dadurch gekennzeichnet, dass die Pumpeneinheit (2) zwei Kolbenpumpen aufweist, die so geschaltet sind, dass sie reziprok arbeiten, und durch ein Umsteuerventil zur Einleitung des Flüssigkeitsstroms in die Filtereinheit (3).

6. Filtervorrichtung nach Anspruch 2, dadurch gekennzeichnet dass die steuerbare Pumpeneinheit (2) mindestens eine Kolbenpumpe aufweist und die Umsteuereinheit (10) der Filtereinheit (3) nachgeschaltet und mit der Steuereinheit (S) zur Weg- und Zuschaltung eines der beiden Filter für den simultanen Betrieb verbunden ist.

7. Filtervorrichtung nach einem der Ansprüche 1 bis 6, dadurch gekennzeichnet, dass ein Prozessor (51) und eine durch diesen über Bus (11,12,13,14) steuerbare Pumpeneinheit (2) mit nachgeschalteter Umsteuereinheit (10) in Form eines Multiplexers zur programmierten Verteilung des Mediums auf eine Mehrzahl von Filtern und eine digital ansteuerbare Sensor- bzw. Steuereinheit (S) vorgesehen sind.

8. Filtervorrichtung nach Anspruch 7, dadurch gekennzeichnet, dass zwischen Multiplexer (10) und Filter $(3,3'..3^n)$ Drucksensoren (P1,P2..Pn) vorgesehen sind.

9. Filtervorrichtung nach einem der vorangegangenen Ansprüche, dadurch gekennzeichnet, dass die Mittel (L1,L2) zur Detektion des Flüssigkeitsspiegels mehr als zwei Pegelsensoren aufweist, die in Verbindung mit der Steuereinheit (S) die Messung des Pegelverhaltens gestatten.

10. Verfahren zum Betrieb einer Filtervorrichtung nach einem der Ansprüche 8 oder 9, gekennzeichnet durch die Steuerung der Pumpeneinheit mit Parametern des gemessenen Pegelverhaltens in der Zwischenspeichereinheit und durch Parameter des gemessenen Druckänderungsverhaltens über den zwischen der Zwischenspeichereinheit und angeordneten Filtereinheiten.

11. Verfahren nach Anspruch 10, dadurch gekennzeichnet, dass ein oder zwei Filter zum Betrieb verwendet werden, dass die restlichen Filter in Bereitschaft stehen und während der Bereitschaftszeit diese Filter in bestimmten Zeitabständen zu Kontrollzwecken kurzzeitig in den HauptBetrieb aufgenommen werden.

12. Verfahren nach Anspruch 11, dadurch gekennzeichnet, dass für den Betrieb ein Filter aus dem gesamten Filtersatz mit einem mittleren Druckanstiegsverhalten gegen den Pumpendruck und das Filter mit dem schnellsten Druckanstiegsverhalten gegen den Pumpendruck für den Betrieb ausgewählt werden.

13. Verfahren nach Anspruch 12, dadurch gekennzeichnet, dass ein Filter mit einem Druckanstiegsvehalten, das höher liegt, als ein bestimmter Schwellwert, vom Betrieb ausgeschieden und ein anderes Filter mit geringerem Druckanstiegsvehalten in Betrieb genommen wird.

14. Verfahren nach einem der Ansprüche 11 bis 13, dadurch gekennzeichnet, dass Filter mit einem gemessen am spezifischen Druckanstiegsverhalten des eingesetzten Filtertyps unspezifischen Verhalten vom Betrieb ausgeschieden und/oder angezeigt und/oder protokolliert werden.

**15.** Verfahren nach einem der Ansprüche 10 bis 14, dadurch gekennzeichnet, dass die Verteilung des zu filtrierenden Mediums durch eine Verteilereinheit im Multiplexbetrieb durchgeführt wird.

**Claims**

**1.** Filter apparatus for reagents for feeding particle analysis units, characterised by a controllable pump unit (2) which, on the input side, can be connected to a container for a fluid medium which is to be filtered and, on the output side, is connected to a filter unit (3) and this filter unit is connected to an intermediate storage unit (4) for the fluid medium from which the fluid delivery to the particle analyzer occurs, the intermediate storage unit (4) having means (L1, L2) for the purpose of detecting the fluid level and the detecting means being connected to a control unit (S) for the control of the pump unit.

**2.** Filter apparatus according to claim 1, characterised in that the filter unit (3) has two filters which can be operated in parallel and which are connected with a directional unit (10) for the purpose of switching the fluid flow through the filter.

**3.** Filter apparatus according to claim 2, characterised in that one of the two filters can be switched into the system by means of the detecting means (L2) for the fluid level which is lower in terms of volume.

**4.** Filter apparatus according to claim 1, characterised in that the pump unit (2) has a piston pump, the pumping speed and pump pressure of which are controlled by the control unit (S), the control unit (S) having an input for a working cycle signal sequence from the particle analysis unit (5) for the pump cadence.

**5.** Filter apparatus according to claim 4, characterised in that the pump unit (2) has two piston pumps which are connected in such a way that they operate reciprocally, and by a reversing valve for the introduction of the fluid current into the filter unit (3).

**6.** Filter apparatus according to claim 2, characterised in that the controllable pump unit (2) has at least one piston pump and the directional unit (10) of the filter unit (3) is connected downstream thereof and is connected to the control unit (S) for the purpose of switching, into and out of the system, one of the two filters for the simultaneous operation.

**7.** Filter apparatus according to one of claims 1 to 6, characterised in that there are provided a processor (51) and a pump unit (2) which can be controlled by the former by way of a bus (11, 12, 13, 14), having a downstream-connected directional unit (10) in the form of a multiplexer for the programmed distribution of the medium to a plurality of filters, and a sensor or control unit (S) which can be activated digitally.

**8.** Filter apparatus according to claim 7, characterised in that pressure sensors (P1,P2..Pn) are provided between multiplexer (10) and filter $(3,3'..3^n)$.

**9.** Filter apparatus according to one of the preceding claims, characterised in that the means (L1, L2) for detecting the fluid level has more than two level sensors which in conjunction with the control unit (S) permit the measurement of the level behaviour.

**10.** Method for the operation of a filter apparatus according to one of claims 8 or 9, characterised by the control of the pump unit with parameters of the measured level behaviour in the intermediate storage unit and by means of parameters of the measured pressure change behaviour among the filter units arranged between the intermediate storage unit and the pump unit.

**11.** Method according to claim 10, characterised in that one or two filters are used for operation, in that the remaining filters stand in readiness and during the readiness time these filters are taken up into the main operation for a short time at certain time intervals for checking purposes.

**12.** Method according to claim 11, characterised in that for operation one filter from the whole filter set with an average pressure rise behaviour against the pump pressure and the filter with the fastest pressure rise behaviour against the pump pressure are selected for the operation.

**13.** Method according to claim 12, characterised in that one filter with a pressure rise behaviour which is higher than a certain threshold value is eliminated from operation and another filter with lower pressure rise behaviour is taken into the operation.

**14.** Method according to one of the claims 11 to 13, characterised in that filters with a behaviour which, measured with respect to the specific pressure rise behaviour of the filter type used, is non-specific are eliminated from the operation and/or indicated and/or logged.

15. Method according to one of the claims 10 to 14, characterised in that the distribution of the medium to be filtered is carried out by a distributor unit in multiplex operation.

## Revendications

1. Appareil à filtre pour des réactifs alimentant les appareils d'analyse de particules, appareil caractérisé par une pompe commandée (2) dont l'entrée peut être reliée à un réservoir contenant le liquide à filtrer et dont la sortie est reliée à une unité à filtre (3) qui est elle-même reliée à une unité de stockage intermédiaire (4) pour le liquide, unité qui fournit le liquide à l'analyseur de particules, l'unité de stockage intermédiaire (4) comportant des moyens (L1, L2) pour détecter le niveau du liquide et le moyen de détection est relié à l'unité de commande (s) qui commande l'unité de pompe.

2. Appareil à filtre selon la revendication 1, caractérisé en ce que l'unité à filtre (3) comporte deux filtres susceptibles de fonctionner en parallèle et qui sont reliés à une unité de commutation (10) pour commuter le passage du liquide à travers les filtres.

3. Appareil à filtre selon la revendication 2, caractérisé en ce que l'un des deux filtres peut être branché par le moyen de détection (L2) à un niveau de liquide plus bas en volume.

4. Appareil à filtre selon la revendication 1, caractérisé en ce que la pompe (2) est une pompe à piston dont la vitesse de pompage et la pression de pompage sont commandées par l'unité de commande (S), cette unité (S) ayant une entrée pour une succession de signaux de cadence de travail provenant de l'appareil d'analyse de particules (5) pour la cadence de la pompe.

5. Appareil à filtre selon la revendication 4, caractérisé en ce que l'unité à pompe (2) comporte deux pompes à piston commutées pour fonctionner de manière réciproque et un inverseur assure le passage du liquide dans l'unité de filtre (3).

6. Appareil à filtre selon la revendication 2, caractérisé en ce que la pompe commandée (2) comporte au moins une pompe à piston et l'unité de commutation (10) de l'unité de filtre (3) est en aval et est reliée à l'unité de commande (S) pour couper ou brancher l'un des deux filtres pour le fonctionnement simultané.

7. Appareil à filtre selon l'une des revendications 1 à 6, caractérisé par un processeur (51) et une pompe (2) commandée à partir de celui-ci par un bus (11, 12, 13, 14) avec en aval une unité de commande (10) sous la forme d'un multiplexeur pour la distribution programmée du liquide entre plusieurs filtres et une unité à capteur et à commande (S) commandés de manière numérique.

8. Appareil à filtre selon la revendication 7, caractérisé en ce qu'entre le multiplexeur (10) et le filtre (3, 3' ... $3^n$) il y a des capteurs de pression (P1, P2 ...Pn).

9. Appareil à filtre selon l'une des revendications précédentes, caractérisé en ce que les moyens (L1, L2) pour détecter le niveau de liquide comportent plus de deux capteurs de niveau qui permettent en liaison avec l'unité de commande (S) de mesurer le comportement des niveaux.

10. Procédé pour la mise en oeuvre d'un appareil à filtre selon l'une des revendications 8 ou 9, caractérisé en ce que la commande de la pompe se fait par les paramètres du comportement des niveaux mesurés dans l'unité de stockage intermédiaire et par les paramètres du comportement de variation de pression mesurée à l'unité du filtre interposée entre la pompe et l'unité de stockage intermédiaire.

11. Procédé selon la revendication 10, caractérisé en ce qu'on utilise un ou deux filtres et les filtres résiduels sont prêts à fonctionner et sont mis en oeuvre dans les intervalles déterminés pour des contrôles de court instant, ces filtres étant ainsi mis en fonctionnement principal.

12. Procédé selon la revendication 11, caractérisé en ce que pour le fonctionnement d'un filtre de l'ensemble des filtres, on sélectionne celui ayant la montée en pression moyenne pour la pression de la pompe et le filtre ayant la montée en pression la plus rapide vis-à-vis de la pression de la pompe.

13. Procédé selon la revendication 12, caractérisé en ce qu'un filtre à montée en pression supérieure à un seuil prédéterminé est mis hors service et un autre filtre à plus faible montée en pression est mis en oeuvre.

14. Procédé selon l'une des revendications 11 à 13, caractérisé en ce que les filtres ayant un comportement mesuré non spécifique pour la montée en pression spécifique du type de filtre utilisé, sont éliminées et/ou sont affichés et/ou font l'objet d'un procès-verbal.

15. Procédé selon l'une des revendications 10 à 14, caractérisé en ce que la distribution du fluide à filtrer est assurée par une unite' de distribution fonctionnant en multiplex.

FIG. 3

FIG. 2

FIG. 1

FIG. 4

FIG. 5

FIG. 6

| WBC | 0.0 k/μl |
| RBC | 0.00 M/μl |
| HB | .1 g/dl |
| PLT | 0 k/μl |

| WBC | .1 k/μl |
| RBC | 0.00 M/μl |
| HB | 0.0 g/dl |
| PLT | 16 k/μl |

I

II